(19) Europäisches Patentamt
European Patent Office
Office européen des brevets

(11) EP 1 693 430 A2

(12) EUROPEAN PATENT APPLICATION

(43) Date of publication:
23.08.2006 Bulletin 2006/34

(51) Int Cl.:
*C09J 133/06* (2006.01) *C09J 7/02* (2006.01)

(21) Application number: 06110235.6

(22) Date of filing: 21.02.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 22.02.2005 JP 2005045643

(71) Applicant: NITTO DENKO CORPORATION
Ibaraki-shi, Osaka 567-8680 (JP)

(72) Inventors:
- Kishioka, Hiroaki
Ibaraki-shi,
Osaka 567-8680 (JP)
- Amano, Tatsumi
Ibaraki-shi,
Osaka 567-8680 (JP)
- Ukei, Natsuki
Ibaraki-shi,
Osaka 567-8680 (JP)

(74) Representative: TBK-Patent
Bavariaring 4-6
80336 München (DE)

(54) **Pressure-sensitive adhesive compositions, pressure-sensitive adhesive sheets, and double-sided pressure-sensitive adhesive tapes**

(57) An object of the present invention is to provide a pressure-sensitive adhesive composition which is excellent in antistatic property of a pressure-sensitive adhesive tapes when separators are peeled off, and has reduced stainability in an adherend, and excellent in transparency, and prevention of occurrence of peeling off and separation, and an antistatic pressure-sensitive adhesive sheet and a double-sided pressure-sensitive adhesive tape using the same. There is provided a pressure-sensitive composition comprising an ionic liquid, a (meth)acryl-based oligomer of weight-average molecular weight of 1,000 to 50,000, and a (meth)acryl-based polymer of glass transition temperature (Tg) of 0°C or less as base polymer.

[FIG. 1]

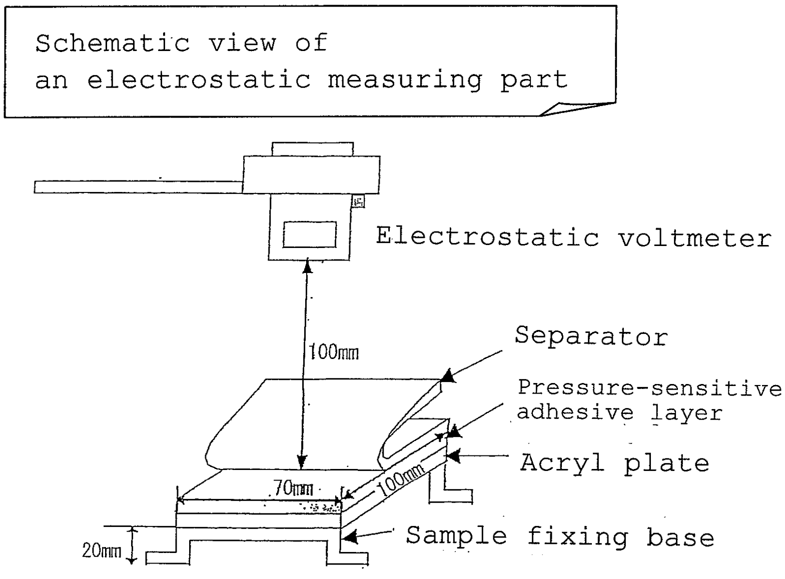


EP 1 693 430 A2

## Description

BACKGROUND OF THE INVENTION

Field of the invention

The present invention relates to a pressure-sensitive adhesive composition having antistatic property, and pressure-sensitive adhesive sheets and a double-sided pressure-sensitive adhesive tape obtained by formulating into a form of a sheet or a double-sided pressure-sensitive adhesive tape using the composition.

Pressure-sensitive adhesive sheets comprising an antistatic pressure-sensitive adhesive composition of the present invention is suitably used in plastic products on which static electricity is easily generated. Among them, particularly, the sheets are useful as antistatic pressure-sensitive adhesive sheets used in utilities disliking static electricity such as an electronic instrument, as well as a double-sided pressure-sensitive adhesive tape.

Description of the Related Art

A pressure-sensitive adhesive adheres at ordinary temperature, in short time, and only by application of small pressure, and is thus used in various applications for adhering objects. For example, in optical applications, a panel of liquid crystal display is formed by adhering optical members such as polarizing plate and wavelength plate to a liquid crystal cell by way of a pressure-sensitive adhesive.

In more specific forms of use, double-sided pressure-sensitive adhesive tapes are formed by applying a pressure-sensitive adhesive on both sides of functional films, conductive films, surface protecting films, or supports, a double-sided pressure-sensitive adhesive tapes of baseless type is formed without having supports, or pressure-sensitive processed products are formed by adhering and processing.

In most cases, generally, a pressure-sensitive adhesive side (pressure-sensitive adhesive layer) is used together with a separator for the purpose of protection. When the optical member is adhered to the liquid crystal cell, the separator is no longer necessary, and is peeled off and removed. Generally, separators and optical members are composed of plastic materials, and are high in electric insulation, and generate static electricity by rubbing or peeling off: Therefore, static electricity is generated when the separator is peeled off from the polarizing plate or other optical member. While the static electricity is remaining, if a voltage is applied to the liquid crystal, orientation of liquid crystal molecules may be lost, or the panel may be damaged, or dust or particles may stick to the pressure-sensitive adhesive side due to static electricity, and the optical member may be contaminated. To prevent such problems, various antistatic treatments are attempted.

For example, a method is disclosed that one or more surfactants are added to the pressure-sensitive adhesive, the surfactant is transferred from the pressure-sensitive adhesive to the adherend, and charging is prevented (see, for example, Japanese Patent Application Laid-Open No. 9-165460). However, this invention is intended to transfer the surfactant to the adherend by bleeding on the pressure-sensitive adhesive surface, and when applied in protecting film, staining of adherend cannot be avoided in order to obtain a sufficient antistatic effect. In consideration of staining of adherend, if the amount of surfactant added is reduced, sufficient antistatic effect is not obtained. Therefore, when a pressure-sensitive adhesive containing a low molecular surfactant is applied in an optical application, it is difficult to obtain a sufficient antistatic effect without sacrificing the optical characteristic of optical member.

A method is disclosed to suppress bleeding of antistatic agent on pressure-sensitive adhesive surface by adding an antistatic agent composed of polyether polyol and an alkaline metal salt to an acrylic pressure-sensitive adhesive (see, for example, Japanese Patent Application Laid-Open No. 6-128539). In this method, too, it is found that bleeding of antistatic agent cannot be avoided sufficiently, and pressure-sensitive characteristic is spoiled or the durability may be lowered, and thus has a restriction in application.

SUMMARY OF THE INVENTION

In the light of such background, it is an object of the invention to provide a pressure-sensitive adhesive composition which is excellent in antistatic property of a pressure-sensitive adhesive sheets when separators are peeled off, and has reduced stainability in an adherend, and excellent in transparency, and prevention of occurrence of peeling off and separation, and an antistatic pressure-sensitive adhesive sheet and a double-sided pressure-sensitive adhesive tape using the same.

Summary of the invention

In order to solve the aforementioned problems, the present inventors intensively studied and, as a result, found

out that the aforementioned object can be attained by a pressure-sensitive adhesive composition shown below, which resulted in completion of the present invention.

That is, a pressure-sensitive adhesive composition of the present invention is characterized in that it contains an ionic liquid, a (meth)acryl-based oligomer of weight-average molecular weight of 1,000 to 50,000, and a (meth)acryl-based polymer of glass transition temperature (Tg) of 0˚C or less as base polymer.

In the present invention, a (meth)acryl-based polymer refers to an acryl-based polymer and/or a methacryl-based polymer, and, the (meth)acrylate refers to an acrylate and/or a methacrylate.

The ionic liquid in the present invention refers to a melt salt (ionic compound) exhibiting the liquid state at room temperature (25˚C).

According to the present invention, the pressure-sensitive adhesive composition contains the ionic liquid, (meth) acryl-based oligomer, and (meth)acryl-based polymer, and therefore bleeding of antistatic component is suppressed, staining of adherend is decreased in the time course and at high temperature, and the antistatic effect is excellent. Reason of suppressing staining of adherend is not clarified, but it is estimated that the use of ionic liquid and (meth) acryl-based oligomer may contribute to compatibility with base polymer, and well-balanced interaction of conductivity and other properties, so that an excellent antistatic effect is obtained with a small amount added, and thereby both suppression of staining of adherend and excellent antistatic effect are realize.

In addition, the aforementioned ionic liquids are preferably in the state of liquid at room temperature, and therefore, addition to, diffusion in, and dissolving in pressure-sensitive adhesive compositions can be easily carried out, in comparison with solid salts. Furthermore, the ionic liquid has no vapor pressure (non-volatile), and therefore, it does not vanish with time, and antistatic properties are maintained.

In this pressure-sensitive adhesive composition, (meth)acryl-based oligomer of weight-average molecular weight of 1,000 to 50,000 is used, and it is preferred to add 10 parts by weight to 35 parts by weight of (meth)acryl-based oligomer in 100 parts by weight of (meth)acryl-based polymer. By using the (meth)acryl-based oligomer, compatibility with ionic liquid and base polymer is improved, bleeding of pressure-sensitive adhesive composition to adherend is suppressed, and a pressure-sensitive adhesive composition of low staining and low corrosion is realized.

In the foregoing, it is preferable that the ionic liquid is one or more kinds of a nitrogen-containing onium salt, a sulfur-containing onium salt, and a phosphorus-containing onium salt. In particular, it is preferable that the ionic liquid contains one or more kinds of cations represented by the following general formulas (A) to (D). By an ionic liquids having these cations, further excellent antistatic ability is obtained.

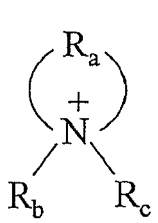
(A)

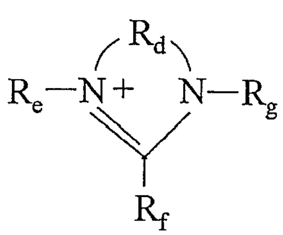
(B)

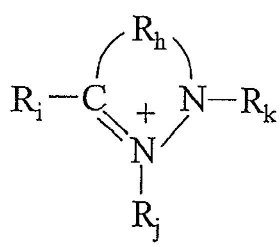
(C)

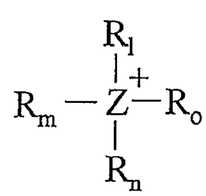
(D)

[in the formula (A), $R_a$ represents a hydrocarbon group of a carbon number of 4 to 20, and may contain a hetero atom, and $R_b$ and $R_c$ are the same or different, represent hydrogen or a hydrocarbon group of a carbon number of 1 to 16, and may contain a hetero atom, provided that, when a nitrogen atom contains a double bond, $R_c$ is not present]

[in the formula (B), $R_d$ represents a hydrocarbon group of a carbon number of 2 to 20, and may contain a hetero atom, and $R_e$, $R_f$ and $R_g$ are the same or different, represent hydrogen or a hydrocarbon group of a carbon number of 1 to 16, and may contain a hetero atom]

[in the formula (C), $R_h$ represents a hydrocarbon group of a carbon number of 2 to 20, and may contain a hetero atom, and $R_i$, $R_j$ and $R_k$ are the same or different, represent a hydrogen or a hydrocarbon group of a carbon number of 1 to 16, and may contain a hetero atom]

[in the formula (D), Z represents a nitrogen atom, a sulfur atom, or a phosphorus atom, and $R_l$, $R_m$, $R_n$ and $R_o$ are the same or different, represent a hydrocarbon group of a carbon number of 1 to 20, and may contain a hetero atom, provided that, when Z is a sulfur atom, $R_o$ is not present]

The (meth)acryl-based oligomer is preferred to be a (meth)acryl-based oligomer of glass transition temperature (Tg) of 60˚C to 190˚C. By using such (meth)acryl-based oligomer, a pressure-sensitive adhesive composition excellent in prevention of peeling off and separation can be obtained.

Further, the (meth)acryl-based oligomer is preferred to be a (meth)acryl-based oligomer mainly containing one

type or more of acrylate and/or methacrylate having an alicyclic alkyl group. By using such (meth)acryl-based oligomer, a pressure-sensitive adhesive composition further enhanced in prevention of peeling off and separation can be obtained.

In the pressure-sensitive adhesive composition, the base polymer is a (meth)acryl-based polymer of glass transition temperature (Tg) of 0°C or less, and the (meth)acryl-based polymer is preferred to be a (meth)acryl-based polymer mainly containing one type or more of acrylate and/or methacrylate having an alkyl group with 1 to 14 carbon atoms. By using such (meth)acryl-based polymer, balance of compatibility with ionic liquid and base polymer is improved, and a sufficient pressure-sensitive characteristic can be maintained.

On the other hand, a pressure-sensitive adhesive layer of the present invention is characterized in that the aforementioned pressure-sensitive adhesive composition is crosslinked. By performing crosslinking by appropriately regulating a constitutional unit and a constitutional ratio of a (meth) acryl-based polymer, selection of a crosslinking agent, and an addition ratio, a pressure-sensitive adhesive sheet more excellent in heat resistance and weather resistance can be obtained.

In addition, the pressure-sensitive adhesive sheets of the invention are characterized by having a pressure-sensitive adhesive layer obtained by crosslinking the above pressure-sensitive adhesive composition on either one side or both sides of a support. By the pressure-sensitive adhesive sheet of the invention, since the pressure-sensitive adhesive composition of the invention having such actions and effects is used, electrification property of the pressure-sensitive adhesive layer at the time of peeling off can be improved, staining of adherend is decreased, and a pressure-sensitive adhesive sheet excellent in adhesion reliability is obtained.

Furthermore, the double-sided pressure-sensitive adhesive tapes of the invention are characterized by having a pressure-sensitive adhesive layer obtained by crosslinking the above pressure-sensitive adhesive composition on both sides of a support. By the double-sided pressure-sensitive adhesive tape of the invention, since the pressure-sensitive adhesive composition of the invention having such actions and effects is used, electrification property of the pressure-sensitive adhesive layer at the time of peeling off can be improved, staining of adherend is decreased, and a pressure-sensitive adhesive sheet excellent in adhesion reliability is obtained.

Brief description of the drawing

Fig.1 is a schematic construction view of an electrostatic measuring part used for measuring a peeling electrification voltage in Examples.

Best mode for carrying out the invention

Embodiments of the present invention will be explained in detail below.

The pressure-sensitive adhesive composition of the present invention is characterized in that it contains an ionic liquid, a (meth)acryl-based oligomer of weight-average molecular weight of 1,000 to 50,000, and a (meth)acryl-based polymer of glass transition temperature (Tg) of 0°C or less as base polymer.

The ionic liquid in the present invention refers to a melt salt (ionic compound) exhibiting the liquid state at room temperature (25°C).

As the ionic liquid, a nitrogen-containing onium salt, a sulfur-containing onium salt or a phosphorus-containing onium salt is preferably used. In particular, since excellent antistatic ability is obtained, an ionic liquid comprising an organic cation component represented by the following general formulas (A) to (D), and an anion component is preferably used.

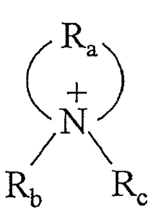
(A)

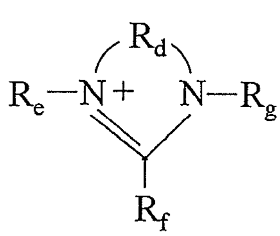
(B)

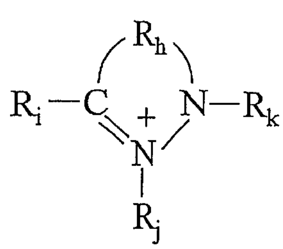
(C)

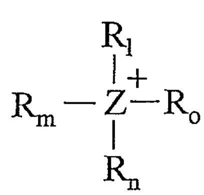
(D)

[in the formula (A), $R_a$ represents a hydrocarbon group of a carbon number of 4 to 20, and may contain a hetero atom,

and $R_b$ and $R_c$ are the same or different, represent hydrogen or a hydrocarbon group of a carbon number of 1 to 16, and may contain a hetero atom, provided that, when a nitrogen atom contains a double bond, $R_c$ is not present]
[in the formula (B), $R_d$ represents a hydrocarbon group of a carbon number of 2 to 20, and may contain a hetero atom, and $R_e$, $R_f$ and $R_g$ are the same or different, represent hydrogen or a hydrocarbon group of a carbon number of 1 to 16, and may contain a hetero atom]
[in the formula (C), $R_h$ represents a hydrocarbon group of a carbon number of 2 to 20, and may contain a hetero atom, and $R_i$, $R_j$ and $R_k$ are the same or different, represent a hydrogen or a hydrocarbon group of a carbon number of 1 to 16, and may contain a hetero atom]
[in the formula (D), Z represents a nitrogen atom, a sulfur atom, or a phosphorus atom, and $R_l$, $R_m$, $R_n$ and $R_o$ are the same or different, represent a hydrocarbon group of a carbon number of 1 to 20, and may contain a hetero atom, provided that, when Z is a sulfur atom, $R_o$ is not present]

Examples of the cation represented by the formula (A) include a pyridinium cation, a piperidinium cation, a pyrrolidinium cation, a cation having a pyrroline skeleton, and a cation having a pyrrole skeleton.

Specific examples include 1-ethylpyridinium cation, a 1-butylpyridinium cation, 1-hexylpyridinium cation, a 1-butyl-3-methylpyridinium cation, a 1-butyl-4-methylpyridinium cation, a 1-hexyl-3-methylpyridinium cation, a 1-butyl-3,4-dimethylpyridinium cation, a 1,1-dimethylpyrrolidinium cation, a 1-ethyl-1-methylpyrrolidinium cation, a 1-methyl-1-propylpyrrolidinium cation, a 2-methyl-1-pyrroline cation, a 1-ethyl-2-phenylindole cation, a 1,2-dimethylindole cation, and a 1-ethylcarbazole cation.

Examples of the cation represented by the formula (B) include an imidazolium cation, a tetrahydropyrimidinium cation, and a dihydropyrimidinium cation.

Specific examples include a 1,3-dimethylimidazolium cation, a 1,3-diethylimidazolium cation, a 1-ethyl-3-methylimidazolium cation, a 1-butyl-3-methyimidazolium cation, a 1-hexyl-3-methylimidazolium cation, 1-ocytl-3-methylimidazolium cation, a 1-decyl-3-methylimidazolium cation, a 1-dodecyl-3-methylimidazolium cation, a 1-tetradecyl-3-methylimidazolium cation, a 1,2-dimethyl-3-propylimidazolium cation, a 1-ethyl-2,3-dimethylimidazolium cation, a 1-butyl-2,3-dimethylimidazolium cation, a 1-hexyl-2,3-dimethylimidazolium cation, a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, and a 1,2,3,4-tetramethyl-1,6-dihydropyrimidinium cation.

Examples of the cation represented by the formula (C) include a pyrazolium cation, and a pyrazolinium cation.

Specific examples include a 1-methylpyrazolium cation, a 3-methylpyrazolium cation, and a 1-ethyl-2-methylpyrazolinium cation.

Examples of the cation represented by the formula (D) include a tetraalkylammonium cation, a trialkylsulfonium cation, a tetraalkylphosphonium cation, and those cations in which a part of the alkyl group is substituted with an alkenyl group, an alkoxyl group, or an epoxy group.

Specific examples include, for example, a tetramethyl ammonium cation, a tetraethyl ammonium cation, a tetrapropyl ammonium cation, a tetrabutyl ammonium cation, a tetrapentyl ammonium cation, a tetrahexyl ammonium cation, a tetraheptyl ammonium cation, a triethyl methyl ammonium cation, a tributyl ethyl ammonium cation, a trimethyl decyl ammonium cation, a trioctyl methyl ammonium cation, a tripentyl butyl ammonium cation, a trihexyl methyl ammonium cation, a trihexyl pentyl ammonium cation, a triheptyl methyl ammonium cation, a triheptyl hexyl ammonium cation, an N, N-diethyl-N-methyl-N-(2-metoxyetyl) ammonium cation, a glycidyl trimethyl ammonium cation, a diallyl dimethyl ammonium cation, an N, N-dimethyl-N, N-dipropyl ammonium cation, an N, N-dimethyl-N, N-dihexyl ammonium cation, an N, N-dipropyl-N, N-dihexyl ammonium cation, an N, N-dimethyl-N-ethyl-N-propyl ammonium cation, an N, N-dimethyl-N-ethyl-N-butyl ammonium cation, an N, N-dimethyl-N-ethyl-N-pentyl ammonium cation, an N, N-dimethyl-N-ethyl-N-hexyl ammonium cation, an N, N-dimethyl-N-ethyl-N-heptyl ammonium cation, an N, N-dimethyl-N-propyl-N-butyl ammonium cation, an N, N-dimethyl-N-propyl-N-pentyl ammonium cation, an N, N-dimethyl-N-propyl-N-hexyl ammonium cation, an N, N-dimethyl-N-propyl-N-heptyl ammonium cation, an N, N-dimethyl-N-butyl-N-hexyl ammonium cation, an N, N-dimethyl-N-butyl-N-heptyl ammonium cation, an N, N-dimethyl-N-pentyl-N-hexyl ammonium cation, an N, N-dimethyl-N-hexyl-N-heptyl ammonium cation, a trimethyl heptyl ammonium cation, an N, N-diethyl-N-methyl-N-propyl ammonium cation, an N, N-diethyl-N-methyl-N-pentyl ammonium cation, an N, N-diethyl-N-methyl-N-heptyl ammonium cation, an N, N-diethyl-N-propyl-N-pentyl ammonium cation, an triethyl methyl ammonium cation, a triethyl propyl ammonium cation, a triethyl pentyl ammonium cation, a triethyl heptyl ammonium cation, an N, N-dipropyl-N-methyl-N-ethyl ammonium cation, an N, N-dipropyl-N-methyl-N-pentyl ammonium cation, an N, N-dipropyl-N-butyl-N-hexyl ammonium cation, an N, N-dibutyl-N-methyl-N-pentyl ammonium cation, an N, N-dibutyl-N-methyl-N-hexyl ammonium cation, a trioctyl methyl ammonium cation, an N-methyl-N-ethyl-N-propyl-N-pentyl ammonium cation, a trimethyl sulfonium cation, a triethyl sulfonium cation, a tributyl sulfonium cation, a trihexyl sulfonium cation, a diethyl methyl sulfonium cation, a dibutyl ethyl sulfonium cation, a dimethyl decyl sulfonium cation, a tetramethyl phosphonium cation,

a tetraethyl phosphonium cation, a tetrabutyl phosphonium cation, a tetrapentyl phosphonium cation, a tetrahexyl phosphonium cation, a tetraheptyl phosphonium cation, a tetraoctyl phosphonium cation, a triethyl methyl phosphonium cation, a tributyl ethyl phosphonium cation, a trimethyl decyl phosphonium cation, and the like.

Among them, there are preferably used a tetra alkyl ammonium cation, such as a triethyl methyl ammonium cation, a tributyl ethyl ammonium cation, a trimethyl decyl ammonium cation, a trioctyl methyl ammonium cation, a tripentyl butyl ammonium cation, a trihexyl methyl ammonium cation, a trihexyl pentyl ammonium cation, a triheptyl methyl ammonium cation, a triheptyl hexyl ammonium cation, an N, N-diethyl-N-methyl-N-(2-metoxy ethyl) ammonium cation, a glycidyl trimethyl ammonium cation, an N, N-dimethyl-N-ethyl-N-propyl ammonium cation, an N, N-dimethyl-N-ethyl-N-butyl ammonium cation, an N, N-dimethyl-N-ethyl-N-pentyl ammonium cation, an N, N-dimethyl-N-ethyl-N-hexyl ammonium cation, an N, N-dimethyl-N-ethyl-N-heptyl ammonium cation, an N, N-dimethyl-N-ethyl-N-nonyl ammonium cation, an N, N-dimethyl-N-propyl-N-butyl ammonium cation, an N, N-dimethyl-N-propyl-N-pentyl ammonium cation, an N, N-dimethyl-N-propyl-N-hexyl ammonium cation, an N, N-dimethyl-N-propyl-N-heptyl ammonium cation, an N, N-dimethyl-N-butyl-N-hexyl ammonium cation, an N, N-dimethyl-N-butyl-N-heptyl ammonium cation, an N, N-dimethyl-N-pentyl-N-hexyl ammonium cation, an N, N-dimethyl-N-hexyl-N-heptyl ammonium cation, an N, N-dimethyl-N, N-dihexyl ammonium cation, a trimethyl heptyl ammonium cation, an N, N-diethyl-N-methyl-N-propyl ammonium cation, an N, N-diethyl-N-methyl-N-pentyl ammonium cation, an N, N-diethyl-N-methyl-N-heptyl ammonium cation, an N, N-diethyl-N-propyl-N-pentyl ammonium cation, a triethyl propyl ammonium cation, a triethyl pentyl ammonium cation, a triethyl heptyl ammonium cation, an N, N-dipropyl-N-methyl-N-ethyl ammonium cation, an N, N-dipropyl-N-methyl-N-pentyl ammonium cation, an N, N-dipropyl-N-butyl-N-hexyl ammonium cation, an N, N-dipropyl-N, N-dihexyl ammonium cation, an N, N-dibutyl-N-methyl-N-pentyl ammonium cation, an N, N-dibutyl-N-methyl-N-hexyl ammonium cation, and an N-methyl-N-ethyl-N-propyl-N-pentyl ammonium cation, a trialkyl sulfonium cation, such as a trimethyl sulfonium cation, a triethyl sulfonium cation, a tributyl sulfonium cation, a trihexyl sulfonium cation, a diethyl methyl sulfonium cation, a dibutyl ethyl sulfonium cation, and a dimethyl decyl sulfonium cation, a tetraalkyl phosphonium cations, such as a tetramethyl phosphonium cation, a tetraethyl phosphonium cation, a tetrabutyl phosphonium cation, a tetrapentyl phosphonium cation, a tetrahexyl phosphonium cation, a tetraheptyl phosphonium cation, a tetraoctyl phosphonium cation, a triethyl methyl phosphonium cation, a tributyl ethyl phosphonium cation, and a trimethyl decyl phosphonium cation.

On the other hand, the anionic component is not particularly limited as far as it satisfies that it becomes an ionic liquid. Specifically, for example, $Cl^-$, $Br^-$ , $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $(CF_3SO_2)_2N^-$, $(CF_3SO_2)_3C^-$, $AsF_6^-$, SbF6$^-$, $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, and $(CF_3SO_2)(CF_3CO)N^-$ are used. Among them, in particular, an anionic component containing a fluorine atom is preferably used because a low melting point ionic compound is obtained.

An embodiment of an ionic liquid used in the present invention is used by appropriately selecting from a combination of the aforementioned cation component and anion component.

Specific examples include, for example, 1-butyl pyridinium tetrafluoro borate, 1-butyl pyridinium hexafluoro phosphate, 1-butyl-3-methyl pyridinium tetrafluoro borate, 1-butyl-3-methyl pyridinium trifluoromethane sulfonate, 1-butyl-3-methyl pyridinium bis(trifluoromethanesulfonyl) imide, 1-butyl-3-methyl pyridinium (pentafluoro ethane sulfonyl) imide, 1-hexyl pyridinium tetrafluoro borate, 2-methyl-1-pyrroline tetrafluoro borate, 1-ethyl-2-phenyl indole tetrafluoro borate, 1, 2-dimethyl indole tetrafluoro borate, 1-ethyl carbazole tetrafluoro borate, 1-ethyl-3-methyl imidazolium tetrafluoro borate, 1-ethyl-3-methyl imidazolium acetate, 1-ethyl-3-methyl imidazolium trifluoro acetate, 1-ethyl-3-methyl imidazolium heptafluoro butyrate, 1-ethyl-3-methyl imidazolium trifluoromethane sulfonate, 1-ethyl-3-methyl imidazolium perfluoro butane sulfonate, 1-ethyl-3-methyl imidazolium dicyanamide, 1-ethyl-3-methyl imidazolium bis(trifluoromethanesulfonyl) imide, 1-ethyl-3-methyl imidazolium bis(pentafluoro ethane sulfonyl) imide, 1-ethyl-3-methyl imidazolium tris(trifluoromethanesulfonyl) methyd, 1-butyl-3-methyl imidazolium tetrafluoro borate, 1-butyl-3-methyl imidazolium hexafluoro phosphate, 1-butyl-3-methyl imidazolium trifluoro acetate, 1-butyl-3-methyl imidazolium heptafluoro butyrate, 1-butyl-3-methyl imidazolium trifluoromethane sulfonate, 1-butyl-3-methyl imidazolium perfluoro butane sulfonate, 1-butyl-3-methyl imidazolium bis(trifluoromethanesulfonyl) imide, 1-hexyl-3-methyl imidazolium bromide, 1-hexyl-3-methyl imidazolium chloride, 1-hexyl-3-methyl imidazolium tetrafluoro borate, 1-hexyl-3-methyl imidazolium hexafluoro phosphate, 1-hexyl-3-methyl imidazolium trifluoromethane sulfonate, 1-octyl-3-methyl imidazolium tetrafluoro borate, 1-octyl-3-methyl imidazolium hexafluoro phosphate, 1-hexyl-2, 3-dimethyl imidazolium tetrafluoro borate, 1, 2-dimethyl-3-propyl imidazolium bis(trifluoromethanesulfonyl) imide, 1-methyl pyrazolium tetrafluoro borate, 3-methyl pyrazolium tetrafluoro borate, tetra hexyl ammonium bis(trifluoromethanesulfonyl) imide, diallyl dimethyl ammonium tetrafluoro borate, diallyl dimethyl ammonium trifluoromethane sulfonate, diallyl dimethyl ammonium bis(trifluoromethanesulfonyl) imide, diallyl dimethyl ammonium bis(pentafluoro ethane sulfonyl) imide, N, N-diethyl-N-methyl-N-(2-methoxy ethyl) ammonium tetrafluoro borate, N, N-diethyl-N-methyl-N-(2-methoxy ethyl) ammonium trifluoromethane sulfonate, N, N-diethyl-N-methyl-N-(2-methoxy ethyl) ammonium bis(trifluoromethanesulfonyl) imide, N, N-diethyl-N-methyl-N-(2-methoxy ethyl) ammonium bis(pentafluoro ethane sulfonyl) imide, glycidyl trimethyl ammonium trifluoromethane sulfonate, glycidyl trimethyl ammonium bis(trifluoromethanesulfonyl) imide, glycidyl trimethyl ammonium bis(pentafluoro ethane sulfonyl)

imide, 1-butyl pyridinium (trifluoromethanesulfonyl) trifluoro acetamide, 1-butyl-3-methyl pyridinium (trifluoromethanesulfonyl) trifluoro acetamide, 1-ethyl-3-methyl imidazolium (trifluoromethanesulfonyl) trifluoro acetamide, N, N-diethyl-N-methyl-N-(2-methoxy ethyl) ammonium (trifluoromethane sulfonate) trifluoro acetamide, diallyl dimethyl ammonium (trifluoromethanesulfonyl) trifluoro acetamide, glycidyl trimethyl ammonium (trifluoromethanesulfonyl) trifluoro acetamide, N, N-dimethyl-N-ethyl-N-propyl ammonium bis(trifluoromethanesulfonyl) imide, N, N-dimethyl-N-ethyl-N-butyl ammonium bis(trifluoromethanesulfonyl) imide, N, N-dimethyl-N-ethyl-N-pentyl ammonium bis(trifluoromethanesulfonyl) imide, N, N-dimethyl-N-ethyl-N-hexyl ammonium bis(trifluoromethanesulfonyl) imide, N, N-dimethyl-N-ethyl-N-heptyl ammonium bis(trifluoromethanesulfonyl) imide, N, N-dimethyl-N-ethyl-N-nonyl ammonium bis(trifluoromethanesulfonyl) imide, N, N-dimethyl-N, N-dipropyl ammonium bis(trifluoromethanesulfonyl) imide, N, N-dimethyl-N-propyl-N-butyl ammonium bis(trifluoromethanesulfonyl) imide, N, N-dimethyl-N-propyl-N-pentyl ammonium bis(trifluoromethanesulfonyl) imide, N, N-dimethyl-N-propyl-N-hexyl ammonium bis(trifluoromethanesulfonyl) imide, N, N-dimethyl-N-propyl-N-heptyl ammonium bis(trifluoromethanesulfonyl) imide, N, N-dimethyl-N-butyl-N-hexyl ammonium bis(trifluoromethanesulfonyl) imide, N, N-dimethyl-N-butyl-N-heptyl ammonium bis(trifluoromethanesulfonyl) imide, N, N-dimethyl-N-pentyl-N-hexyl ammonium bis(trifluoromethanesulfonyl) imide, N, N-dimethyl-N, N-dihexyl ammonium bis(trifluoromethanesulfonyl) imide, trimethyl heptyl ammonium bis(trifluoromethanesulfonyl) imide, N, N-diethyl-N-methyl-N-propyl ammonium bis(trifluoromethanesulfonyl) imide, N, N-diethyl-N-methyl-N-pentyl ammonium bis(trifluoromethanesulfonyl) imide, N, N-diethyl-N-methyl-N-heptyl ammonium bis(trifluoromethanesulfonyl) imide, N, N-diethyl-N-propyl-N-pentyl ammonium bis(trifluoromethanesulfonyl) imide, triethyl propyl ammonium bis(trifluoromethanesulfonyl) imide, triethyl pentyl ammonium bis(trifluoromethanesulfonyl) imide, triethyl heptyl ammonium bis(trifluoromethanesulfonyl) imide, N, N-dipropyl-N-methyl-N-ethyl ammonium bis(trifluoromethanesulfonyl) imide, N, N-dipropyl-N-methyl-N-pentyl ammonium bis(trifluoromethanesulfonyl) imide, N, N-dipropyl-N-butyl-N-hexyl ammonium bis(trifluoromethanesulfonyl) imide, N, N-dipropyl-N, N-dihexyl ammonium bis(trifluoromethanesulfonyl) imide, N, N-dibutyl-N-methyl-N-pentyl ammonium bis(trifluoromethanesulfonyl) imide, N, N-dibutyl-N-methyl-N-hexyl ammonium bis(trifluoromethanesulfonyl) imide, trioctyl methyl ammonium bis(trifluoromethanesulfonyl) imide, N-methyl-N-ethyl-N-propyl-N-pentyl ammonium bis(trifluoromethanesulfonyl) imide.

As the aforementioned ionic liquid, a commercially available ionic liquid may be used, or the liquid may be synthesized as described below. A method of synthesizing an ionic liquid is not particularly limited as far as an objective ionic liquid is obtained. Generally, a halide method, a hydroxide method, an acid ester method, a chelate forming method, and a neutralization method described in the publication "Ionic liquid-The Front and Future of Development-" (published by CMC) are used.

Regarding a halide method, a hydroxide method, an acid ester method, a chelate forming method, and a neutralization method, a synthesis method using an example of a nitrogen-containing onium salt will be shown below, but other ionic liquid such as a sulfur-containing onium salt, and a phosphorus-containing onium salt can be obtained by the similar procedure.

The halide method is a method which is performed by a reaction shown in the following formulas (1) to (3). First, a tertiary amine and alkyl halide are reacted to obtain halide (Reaction Equation (1), as a halogen, chlorine, bromine or iodine is used).

The resulting halide is reacted with an acid (HA) having an anion structure ($A^-$) of an objective ionic liquid or a salt (MA, M is a cation forming a salt with an objective anion such as ammonium, lithium, sodium and potassium) of an objective ionic liquid to obtain an objective ionic liquid ($R_4NA$).

(1) $R_3N+RX \rightarrow R_4NX$ (X: Cl, Br, I)

(2) $R_4NX+HA \rightarrow R_4NA+HX$

(3) $R_4NX+MA \rightarrow R_4NA+MX$ (M: $NH_4$, Li, Na, K, Ag etc.)

The hydroxide method is a method performed by a reaction shown in (4) to (8). First, a halide ($R_4NX$) is subj ected to ion exchange membrane method electrolysis (reaction equation (4)), an OH-type ion exchange resin method (reaction equation (5)) or a reaction with silver oxide ($Ag_2O$) (reaction equation (6)) to obtain a hydroxide ($R_4NOH$) (as a halogen, chlorine, bromine or iodine is used).

The resulting hydroxide is subj ected to a reaction of reaction equations (7) to (8) as in the aforementioned halide method to obtain an objective ionic liquid ($R_4NH$).

(4) $R_4NX+H_2O \rightarrow R_4NOH+1/2H_2+1/2X_2$ (X: Cl, Br, I)

(5) $R_4NX+P\text{-}OH \rightarrow R_4NOH+P\text{-}X$ (P-OH: OH-type ion exchange resin)

(6) $R_4NX+1/2Ag_2O+1/2H_2O \rightarrow R_4NOH+AgX$

(7) $R_4NOH+HA \rightarrow R_4NA+H_2O$

(8) $R_4NOH+MA \rightarrow R_4NA+MOH$ (M: $NH_4$, Li, Na, K, Ag etc.)

The acid ester method is a method performed by a reaction shown in (9) to (11). First, tertiary amine ($R_3N$) is reacted with acid ester to obtain an acid esterified substance (reaction equation (9), as acid ester, ester of an inorganic acid such as sulfuric acid, sulfurous acid, phosphoric acid, phosphorous acid, and carbonic acid, or ester of organic acid such as methanesulfonic acid, methylphosphonic acid and formic acid is used).

The resulting acid esterified substance is subjected to a reaction of reaction equations (10) to (11) as in the aforementioned halide method, to obtain an objective ionic liquid ($R_4NA$). Alternatively, as acid ester, methyl trifluoromethane sulfonate, or methyl trifluoroacetate may be used to directly obtain an ionic liquid.

(9) $R_3N+ROY \rightarrow R_4NOY$

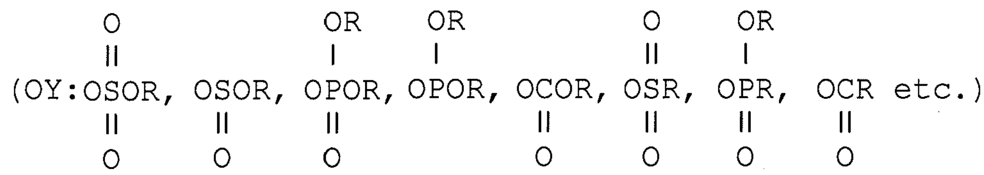

(10) $R_4NOY+HA \rightarrow R_4NA+HOY$

(in the case of OY:
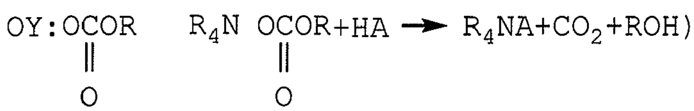

(11) $R_4NOY+MA \rightarrow R_4NA+MOY$ (M: $NH_4$, Li, Na, K, Ag etc.)

The chelate forming method is a method performed by a reaction as shown in (12) to (15). First, halide of quaternary ammonium ($R_4NX$), hydroxide of quaternary ammonium ($R_4NOH$), or carbonic acid esterified substance of quaternary ammonium ($R_4NOCO_2CH_3$) is reacted with hydrogen fluoride (HF) or ammonium fluoride ($NH_4F$) to obtain a quaternary ammonium fluoride salt (reaction equation (12) to (14)).

The resulting quaternary ammonium fluoride salt can be subjected to a chelate forming reaction with fluoride such as $BF_3$, $AlF_3$, $PF_5$, $ASF_5$, $SbF_5$, $NbF_5$ and $TaF_6$, to obtain an ionic liquid (reaction equation (15)).

(12) $R_4NX+HF \rightarrow R_4NF+HX$ (X: Cl, Br, I)

(13) $R_4NY+HF \rightarrow R_4NF+HY$ (Y: OH, $OCO_2CH_3$)

(14) $R_4NY+NH_4F \rightarrow R_4NF+NH_3+HY$ (Y: OH, $OCO_2CH_3$)

(15) $R_4NF+MF_{n-1} \rightarrow R_4NMF_n$
($MF_{n-1}$ : $BF_3$, $AlF_3$, $PF_5$, $ASF_5$, $SbF_5$, $NbF_5$, $TaF_5$ etc.)

The neutralization method is a method performed by a reaction shown in (16). An ionic liquid can be obtained by reacting tertiary amine and an organic acid such as $HBF_4$, $HPF_6$, $CH_3COOH$, $CF_3COOH$, $CF_3SO_3H$, $(CF_3SO_2)_2NH$, $(CF_3SO_2)_3CH$, and $(C_2F_5SO_2)_2NH$.

(16) $R_3N+HZ \rightarrow R_3HN^+Z^-$
[HZ: $HBF_4$, $HPF_6$, $CH_3COOH$, $CF_3COOH$, $CF_3SO_3H$, $(CF_3SO_2)_2NH$, $(CF_3SO_2)_3CH$, $(C_2F_5SO_2)_2NH$ organic acid such as]

The aforementioned R represents hydrogen or a hydrocarbon group of a carbon number of 1 to 20, and may contain a hetero atom.

Since an amount of an ionic liquid to be blended varies depending on compatibility between a polymer and an ionic liquid to be used, the amount can not be always indiscriminately defined, but generally is preferably 0.01 to 40 parts by weight, more preferably 0.05 to 10 parts by weight, most preferably 0.5 to 10 parts by weight relative to 100 parts by weight of a base polymer. When the amount is less than 0.01 part by weight, sufficient antistatic property is not obtained and, when the amount exceeds 40 parts by weight, there is a tendency that staining on an adherend is increased.

In the present invention, the base polymer of which the glass transition temperature (Tg) is no higher than 0˚C is generally used as the base polymer, and it is preferable for the glass transition temperature to be -100˚C to -35˚C, and it is more preferable for it to be -75˚C to -35˚C. In the case where the glass transition temperature is higher than 0˚C, sometimes it becomes difficult to obtain sufficient adhesive strength. Here, the glass transition temperature (Tg) of the invention is calculated in the following mathematical formula (1).

[mathematical formula 1]

$$\frac{W}{Tg} = \frac{W_1}{Tg} + \frac{W_2}{Tg_2} + \cdots + \frac{W_n}{Tg_n} \qquad (1)$$

[In the mathematical formula (1), Tg is Tg (K) of copolymer, $Tg_n$ is Tg (K) of homopolymer of monomer n, and $W_n$ is weight percentage of monomer n.]

Such polymer is, for example, a (meth)acryl-based polymer mainly containing one type or two or more types of acrylate and/or methacrylate having an alkyl group with 1 to 14 carbon atoms.

As for the (meth)acryl-based polymer comprising one or more kinds of (meth)acrylate having an alkyl group of a carbon number of 1 to 14 as the main component, a (meth)acryl-based polymer comprising 50 % to 100 % by weight of one or more kinds of (meth)acrylate having an alkyl group of a carbon number of 1 to 14 as the main component can be cited as a preferable example.

Examples of (meth)acrylate having an alkyl group of a carbon number of 1 to 14 include methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate.

Among them, when used in the pressure-sensitive adhesive sheet of the present invention, (meth)acrylate having an alkyl group of a carbon number of 1 to 9 such as (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate is suitably used. By using a (meth)acryl-based polymer consisting of (meth)acrylate having an alkyl group of a carbon number of 1 to 9, it becomes excellent in preventing of peeling off and separation.

In addition, as for other polymerizable monomer components, a polymerizable monomer for regulating the glass transition temperature and the peeling properties of the (meth)acryl-based polymer can be utilized so that Tg becomes no higher than 0˚C (conventionally, -100˚C or higher), since it becomes easy to maintain adhesive performance, as long as the effects of the present invention are not lost.

As other polymerizable monomer component, a cohesive strength or a heat resistance improving component such as a sulfonic acid group-containing monomer, a phosphoric acid group-containing monomer, vinyl esters, and an aromatic vinyl compound, and a component having a functional group working for improving an adhesive strength or for a crosslinking point, such as a carboxyl group-containing monomer, an acid anhydride group-containing monomer, a hydroxyl group-containing monomer, an epoxy group-containing monomer, vinyl ethers can be appropriately used. Other components may be used alone, or two or more of them may be used by mixing.

Here, when (meth)acrylate having an acid functional group such as a carboxyl group, a sulfonic acid group, and a phosphoric acid group is used, it is preferable to adjust an acid value of a (meth)acryl-based polymer 29 or less. When an acid value of a (meth)acryl-based polymer exceeds 29, there is a tendency that antistatic property is deteriorated.

An acid value can be adjusted by an amount of (meth)acrylate having an acid functional group to be blended, and examples thereof include a (meth)acryl-based polymer obtained by copolymerizing 2-ethylhexyl acrylate as a (meth) acryl-based polymer having a carboxyl group, and acrylic acid. In this case, by adjusting acrylic acid at 3.7 parts by weight relative to a total of 100 parts by weight of 2-ethylhexyl acrylate and acrylic acid, the aforementioned acid value can be satisfied.

Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid, and sodium vinylsulfonate.
Examples of the phosphoric acid group-containing monomer include 2-hydroxyethylacryloyl phosphate.
Examples of the cyano group-containing monomer include acrylonitrile and methacrylonitrile.
Examples of vinylesters include vinyl acetate, vinyl propionate, and vinyl laurate.
Examples of the aromatic vinyl compound include styrene, chlorostyrene, chloromethylstyrene, α-methylstyrene, and other substituted styrene.
Examples of the carboxyl group-containing monomer include (meth)acrylic acid, carboxyethyl (meth)acrylate, carboxypentyl (meth)acrylate, itaconic acid, maleic acid, fumaric acid, crotonic acid, and isocrotonic acid.
Examples of the acid anhydride group-containing monomer include maleic acid anhydride, itaconic acid anhydride, and an acid anhydride of the aforementioned carboxyl group-containing monomer.
Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutylvinyl ether, and diethylene glycol monovinyl ether.
Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.
Examples of the amino group-containing monomer include aminoethyl (meth)acrylate, N, N-dimethylaminoethyl (meth)acrylate, N, N-dimethylaminopropyl (meth)acrylate, and (meth)acryloylmorpholine.
Examples of the imido group-containing monomer include cyclohexylmaleimide, isopropylmaleimide, N-cyclohexylmaleimide, and itaconeimide.
Examples of the epoxy group-containing monomer include glycidyl (meth)acrylate, methylglycidyl (meth)acrylate, and allyl glycidyl ether.
Examples of vinyl ethers include methyl vinyl ether, ethyl vinyl ether, and isobutyl vinyl ether.
The aforementioned (meth)acryl-based polymer of the present invention is obtained by a polymerization method which is generally used as a procedure for synthesizing a (meth)acryl-based polymer such as solution polymerization, emulsion polymerization, bulk polymerization and suspension polymerization. In addition, the resulting polymer may be any of a random copolymer, a block copolymer, and a graft copolymer.
The aforementioned other polymerizable monomer component may be used alone, or two or more kinds may be used by mixing, and a content as a whole is such that a polymerizable monomer component is preferably 0 to 50 parts by weight, more preferably 0 to 20 parts by weight of a total constituting unit of a (meth)acryl-based polymer. By using the aforementioned other polymerizable monomer component, better interaction with an ionic liquid, and better adherability can be appropriately regulated. Among them, in order to improve compatibility with the (meth)acryl-based oligomer, the copolymer which is copolymerized with the functional group-containing monomer such as the carboxyl group-containing monomer, the amino group-containing monomer, the phosphoric group-containing monomer, the amido group-containing monomer, and the imido group-containing monomer is preferably used.
The polymerization initiator, chain transfer agent, and emulsifier used in synthesis (polymerization) of (meth) acryl-based polymer are not particularly specified, and may be properly selected and used.
The polymerization initiator includes, for example, 2,2'-azobis isobutyl nitrile, 2,2'-azobis (2-amidinopropane) dihydrochloride, 2,2'-azobis [2-(5-methyl-2-imidazoline-2-yl) propane] dihydrochloride, 2,2'-azobis (2-methyl propionamidine) disulfate, 2,2'-azobis (N,N'-dimethylene isobutyl amidine), 2,2'-azobis [N-(2-carboxy ethyl)-2-methyl propionamidine] hydrate (VA-057 of Wako Pure Chemical Industries, Ltd.), and other azo initiators, potassium persulfate, ammonium persulfate, and other persulfates, di (2-ethylhexyl) peroxydicarbonate, di (4-t-butyl cyclohexyl) peroxydicarbonate, di-sec-butyl peroxydicarbonate, t-butyl peroxydicarbonate,t-hexyl peroxydicarbonate, t-butyl peroxydicarbonate, dilauroyl peroxide, di-n-octanoyl peroxide, 1,1,3,3-tetramethyl butyl peroxy-2-ethyl hexanoate, di (4-methylbenzoyl) peroxide, dibenzoyl peroxide, t-butyl peroxy isobutylate, 1,1-di (t-hexyl peroxy) cyclohexane, t-butyl hydroperoxide and hydrogen peroxide, and other peroxide initiators, combination of persulfate and sodium hyposulfite, combination of peroxide and sodium ascrobate, and other redox initiator combining peroxide and reducing agent, but are not limited to these examples alone.
The polymerization initiator may be used alone, or two or more of them may be used by mixing, and the total content is preferred to be about 0.005 to 1 part by weight in 100 parts by weight of monomer, and more preferably about 0.02 to 0.5 part by weight.
In the present invention, a chain transfer agent may be used in polymerization. By using a chain transfer agent, the molecular weight of (meth)acryl-based polymer can be adjusted appropriately.

The chain transfer agent includes, for example, lauryl mercaptan, glycidyl mercaptan, mercapto-acetic acid, 2-mercapto-ethanol, thioglycolic acid, thioglycolate 2-ethyl hexyl, 2,3-dimercapto-1-propanol, and alpha-methyl styrene dimer.

These chain transfer agents may be used alone, or two or more of them may be used by mixing, and the total content is preferred to be about 0.01 to 15 parts by weight in 100 parts by weight of monomer.

In addition, the emulsifier includes, for example, sodium lauryl sulfate, ammonium lauryl sulfate, sodium dodecyl benzene sulfonate, ammonium polyoxy ethylene alkyl ether sulfate, sodium polyoxy ethylene alkyl phenyl ether sulfate, other anionic emulsifiers, polyoxy ethylene alkyl ether, polyoxy ethylene alkyl phenyl ether, polyoxy ethylene fatty acid ester, polyoxy ethylene-polyoxy propylene block polymer, and other nonionic emulsifiers. These emulsifiers may be used alone, or two or more of them may be used by mixing.

Further, emulsifiers introducing radical polymerizable functional groups such as a propenyl group or allyl ether group, as reactive emulsifier, include, for example, Aqualon HS-10, HS-20, KH-10, BC-05, BC-10, BC-20 (manufactured by Dai-ichi Kogyo Seiyaku Co., Ltd.), and Adekaliasoap SE10N (manufactured by Asahi Denka Co., Ltd.). Since the reactive emulsifier is taken into the polymer chain after polymerization, resistance to water is improved. The content of emulsifier is preferably 0.3 to 5 parts by weight in 100 parts by weight of monomer, or more preferably 0.5 to 1 part by weight from the viewpoint of polymerization stability or mechanical stability.

The (meth)acryl-based polymer used in the present invention is preferred to have the weight-average molecular weight of 100,000 or more to 3,000,000 or less, more preferably 300,000 or more to 1,000,000 or less, and further preferably 500,000 or more to 900,000 or less. If the weight-average molecular weight is less than 100,000, cohesive strength of pressure-sensitive adhesive composition decreases, a adhesive residue tends to occur, and prevention of peeling off and separation is impaired. If the weight-average molecular weight exceeds 3,000,000, the viscosity is too high, and coating performance tends to be inferior. The weight-average molecular weight is measured by GPC (gel permeation chromatography).

The pressure-sensitive adhesive composition of the present invention contains such (meth)acryl-based polymer.

The present invention comprises (meth)acryl-based oligomer of weight-average molecular weight of 1,000 to 50,000.

The (meth)acryl-based oligomer is a (meth)acryl-based oligomer mainly containing one type or two or more types of acrylate and/or methacrylate having an alkyl group with 1 to 14 carbon atoms.

The (meth)acryl-based oligomer mainly containing one type or two or more types of acrylate and/or methacrylate having an alkyl group with 1 to 14 carbon atoms is a (meth)acryl-based oligomer mainly composed of monomer containing 50 to 100 wt.% of one type or two or more types of acrylate and/or methacrylate having an alkyl group with 1 to 14 carbon atoms.

Examples of (meth)acrylate having an alkyl group of a carbon number of 1 to 14 include methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate.

In particular, the (meth)acryl-based oligomer used in the pressure-sensitive adhesive sheet of the present invention is preferably a (meth)acryl-based oligomer composed of (meth)acrylate having an alicyclic alkyl group. By using the (meth)acryl-based oligomer composed of (meth)acrylate having an alicyclic alkyl group, prevention of peeling off and separation is improved.

Specific examples of (meth)acrylate having an alicyclic alkyl group are cyclohexyl (meth)acrylate, other cycloalkyl (meth)acrylate, isobornyl (meth)acrylate, and other (meth)acrylate containing nonaromatic ring.

As other polymerizable monomer component, a cohesive strength or a heat resistance improving component such as a sulfonic acid group-containing monomer, a phosphoric acid group-containing monomer, vinyl esters, and an aromatic vinyl compound, and a component having a functional group working for improving an adhesive strength or for a crosslinking point, such as a carboxyl group-containing monomer, an acid anhydride group-containing monomer, a hydroxyl group-containing monomer, an epoxy group-containing monomer, vinyl ethers can be appropriately used. Other components may be used alone, or two or more of them may be used by mixing.

Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid, and sodium vinylsulfonate.

Examples of the phosphoric acid group-containing monomer include 2-hydroxyethylacryloyl phosphate.

Examples of the cyano group-containing monomer include acrylonitrile and methacrylonitrile.

Examples of vinylesters include vinyl acetate, vinyl propionate, and vinyl laurate.

Examples of the aromatic vinyl compound include styrene, chlorostyrene, chloromethylstyrene, $\alpha$-methylstyrene, and other substituted styrene.

Examples of the carboxyl group-containing monomer include (meth)acrylic acid, carboxyethyl (meth)acrylate, carboxypentyl (meth)acrylate, itaconic acid, maleic acid, fumaric acid, crotonic acid, and isocrotonic acid.
Examples of the acid anhydride group-containing monomer include maleic acid anhydride, itaconic acid anhydride, and an acid anhydride of the aforementioned carboxyl group-containing monomer.
Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutylvinyl ether, and diethylene glycol monovinyl ether.
Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.
Examples of the amino group-containing monomer include aminoethyl (meth)acrylate, N, N-dimethylaminoethyl (meth)acrylate, N, N-dimethylaminopropyl (meth)acrylate, and (meth)acryloylmorpholine.
Examples of the imido group-containing monomer include cyclohexylmaleimide, isopropylmaleimide, N-cyclohexylmaleimide, and itaconeimide.
Examples of the epoxy group-containing monomer include glycidyl (meth)acrylate, methylglycidyl (meth)acrylate, and allyl glycidyl ether.
Examples of vinyl ethers include methyl vinyl ether, ethyl vinyl ether, and isobutyl vinyl ether.
The aforementioned (meth)acryl-based oligomer of the present invention is obtained by a polymerization method which is generally used as a procedure for synthesizing a (meth)acryl-based polymer such as solution polymerization, emulsion polymerization, bulk polymerization and suspension polymerization. In addition, the resulting polymer may be any of a random copolymer, a block copolymer, and a graft copolymer.
The aforementioned other polymerizable monomer component may be used alone, or two or more kinds may be used by mixing, and a content as a whole is such that a polymerizable monomer component is preferably 1 to 50 parts by weight, more preferably 1 to 30 parts by weight of a total constituting unit of a (meth)acryl-based oligomer. By using the aforementioned other polymerizable monomer component, better interaction with an ionic liquid, and better adherability can be appropriately regulated. Among them, in order to improve compatibility with the (meth)acryl-based oligomer, the copolymer which is copolymerized with the functional group-containing monomer such as the carboxyl group-containing monomer, the amino group-containing monomer, the phosphoric group-containing monomer, the amido group-containing monomer, and the imido group-containing monomer is preferably used.
The polymerization initiator, chain transfer agent, and emulsifier used in synthesis (polymerization) of (meth) acryl-based oligomer are not particularly specified, and may be properly selected and used.
The polymerization initiator includes, for example, 2,2'-azobis isobutyl nitrile, 2,2'-azobis (2-amidinopropane) dihydrochloride, 2,2'-azobis [2-(5-methyl-2-imidazoline-2-yl) propane] dihydrochloride, 2,2'-azobis (2-methyl propionamidine) disulfate, 2,2'-azobis (N,N'-dimethylene isobutyl amidine), 2,2'-azobis [N-(2-carboxy ethyl)-2-methyl propionamidine] hydrate (VA-057 of Wako Pure Chemical Industries, Ltd.), and other azo initiators, potassium persulfate, ammonium persulfate, and other persulfates, di (2-ethylhexyl) peroxydicarbonate, di (4-t-butyl cyclohexyl) peroxydicarbonate, di-sec-butyl peroxydicarbonate, t-butyl peroxydicarbonate,t-hexyl peroxydicarbonate, t-butyl peroxydicarbonate, dilauroyl peroxide, di-n-octanoyl peroxide, 1,1,3,3-tetramethyl butyl peroxy-2-ethyl hexanoate, di (4-methylbenzoyl) peroxide, dibenzoyl peroxide, t-butyl peroxy isobutylate, 1,1-di (t-hexyl peroxy) cyclohexane, t-butyl hydroperoxide and hydrogen peroxide, and other peroxide initiators, combination of persulfate and sodium hyposulfite, combination of peroxide and sodium ascrobate, and other redox initiator combining peroxide and reducing agent, but are not limited to these examples alone.
The polymerization initiator may be used alone, or two or more of them may be used by mixing.
In the present invention, a chain transfer agent may be used in polymerization. By using a chain transfer agent, the molecular weight of (meth)acryl-based polymer can be adjusted appropriately.
The chain transfer agent includes, for example, lauryl mercaptan, glycidyl mercaptan, mercapto-acetic acid, 2-mercapto-ethanol, thioglycolic acid, thioglycolate 2-ethyl hexyl, 2,3-dimercapto-1-propanol, and alpha-methyl styrene dimer.
These chain transfer agents may be used alone, or two or more of them may be used by mixing.
In addition, the emulsifier includes, for example, sodium lauryl sulfate, ammonium lauryl sulfate, sodium dodecyl benzene sulfonate, ammonium polyoxy ethylene alkyl ether sulfate, sodium polyoxy ethylene alkyl phenyl ether sulfate, other anionic emulsifiers, polyoxy ethylene alkyl ether, polyoxy ethylene alkyl phenyl ether, polyoxy ethylene fatty acid ester, polyoxy ethylene-polyoxy propylene block polymer, and other nonionic emulsifiers. These emulsifiers may be used alone, or two or more of them may be used by mixing.
Further, emulsifiers introducing radical polymerizable functional groups such as a propenyl group or allyl ether

group, as reactive emulsifier, include, for example, Aqualon HS-10, HS-20, KH-10, BC-O5, BC-10, BC-20 (manufactured by Dai-ichi Kogyo Seiyaku Co., Ltd.), and Adekaliasoap SE10N (manufactured by Asahi Denka Co., Ltd.). Since the reactive emulsifier is taken into the polymer chain after polymerization, resistance to water is improved. The content of emulsifier is preferably 0.3 to 5 parts by weight in 100 parts by weight of monomer, or more preferably 0.5 to 1 part by weight from the viewpoint of polymerization stability or mechanical stability.

The (meth)acryl-based oligomer used in the present invention is preferred to have the weight-average molecular weight of 1,000 to 50,000, more preferably 3,000 to 6,000, and further preferably 3,300 to 5,500. If the weight-average molecular weight is less than 1,000, effect as oligomer is not obtained, and prevention of peeling off and separation is impaired. If the weight-average molecular weight exceeds 50,000, the compatibility tends to be worse. The weight-average molecular weight is measured by GPC (gel permeation chromatography).

In the present invention, the glass transition temperature (Tg) of (meth)acryl-based oligomer is preferred to be 60˚C to 190˚C, and more preferably 65˚C to 180˚C. If the glass transition temperature (Tg) of (meth)acryl-based oligomer is less than 60˚C, the adhesion of pressure-sensitive adhesive may be lowered. In the present invention, the glass transition temperature (Tg) is calculated in the following mathematical formula (2).

[mathematical formula 2]

$$\frac{W}{Tg} = \frac{W_1}{Tg} + \frac{W_2}{Tg_2} + \cdots + \frac{W_n}{Tg_n} \qquad (2)$$

[In the mathematical formula (2), Tg is Tg (K) of copolymer, $Tg_n$ is Tg (K) of homopolymer of monomer n, and $W_n$ is weight percentage of monomer n.]

In the present invention, the (meth)acryl-based oligomer may be used either alone or in combination of two or more types, and the total content is preferred to be 10 to 35 parts by weight in 100 parts by weight of the (meth)acryl-based polymer, and more preferably 15 to 30 parts by weight. If less than 10 parts by weight, the effect of adding (meth) acryl-based oligomer is hardly obtained, and the prevention of peeling off or separation is not enough, or if added by more than 35 parts by weight, adverse effects may caused on adhesion characteristic of base polymer. Therefore both of cases are preferable.

The pressure-sensitive adhesive composition of the present invention contains such (meth)acryl-based oligomer.

The pressure-sensitive adhesive composition of the invention provides a pressure-sensitive adhesive sheet further excellent in heat resistance and weather resistance by properly crosslinking base polymer such as (meth)acryl-based polymer and (meth)acryl-based oligomer. Specific crosslinking method is to add a crosslinking agent capable of reacting by adding a compound having a group reacting with a carboxyl group, hydroxyl group, amino group, or amido group, contained as crosslinking base point appropriately in (meth)acryl-based polymer such as isocyanate compound, epoxy compound, melamine compound, or aziridine compound.

Among them, examples of the isocyanate compound include aromatic isocyanate such as tolylene diisocyanate, and xylene diisocyanate, alicycilc isocyanate such as isophorone diisocyanate and aliphatic isocyanate such as hexamethylene diisocyanate. In particular, from the viewpoint of obtaining an appropriate cohesive strength, isocyanate compound or epoxy compound is used preferably. These compounds may be used alone, or two or more of them may be used by mixing.

More specific examples of the isocyanate compound include lower aliphatic polyisocyanates such as butylene diisocyanate, and hexamethylene diisocyanate, alicyclic isocyanates such as cyclopentylene diisocyanate, cyclohexylene diisocyanate, and isophorone diisocyanate, aromatic diisocyanates such as 2,4-tolylene diisocyanate, 4,4'-diphenylmethane diisocyanate, and xylene diisocyanate, and isocyanate adducts such as trimethylolpropane/tolylene diisocyanate trimer adduct (trade name: Coronate L manufactured by Nippon Polyurethane Industry Co., Ltd.), trimethylolpropane/hexamethylene diisocyanate trimer adduct (trade name: Coronate HL manufactured by Nippon Polyurethane Industry Co., Ltd.), and isocyanurate of hexamethylene diisocyanate (trade name: Coronate HX manufactured by Nippon Polyurethane Industry Co., Ltd.). These isocyanate compounds may be used alone, or may be used by mixing two or kinds of them.

Examples of the epoxy compound include N,N,N',N'-tetraglycidyl-m-xylenediamine (trade name TETRAD-X manufactured by Mitsubishi Gas Chemical Company, Inc.) and 1,3-bis(N,N-diglycidylaminomethyl)cyclohexane (trade name TETRAD-C manufactured by Mitsubishi Gas Chemical Company Inc.). These compounds may be used alone,

or may be used by mixing two or more kinds.

Examples of the melamine-based resin include hexamethylolmelamine.

Examples of the aziridine derivative include trade name HDU, trade name TAZM, and trade name TAZO (all manufactured by Sogo Pharmaceutical Co., Ltd.) as a commercially available product. These compounds may be used alone, or may be used by mixing two or more kinds.

An amount of these crosslinking agents to be used depends on balance between a (meth)acryl-based polymer to be crosslinked, and is appropriately selected depending on utility as a pressure-sensitive adhesive sheet. In order to obtain sufficient heat resistance due to a cohesive strength of an acryl pressure-sensitive adhesive, generally, the crosslinking agent is contained preferably at 0.001 to 20 parts by weight, more preferably 0.001 to 10 parts by weight relative to 100 parts by weight of the (meth)acryl-based polymer. When a content is less than 0.001 part by weight, crosslinking formation due to a crosslinking agent becomes insufficient, a cohesive strength of a pressure-sensitive adhesive composition becomes small, and sufficient heat resistance is not obtained in some cases, and there is a tendency that it becomes cause for an adhesive residue. On the other hand, when a content exceeds 20 parts by weight, a cohesive strength of a polymer is great, fluidlity is reduced, and wetting on an adherend becomes insufficient, and there is a tendency that this becomes cause for peeling off.

Alternatively, a polyfunctional monomer containing two or more radiation-reactive unsaturated bonds as a substantial crosslinking agent is added, and this may be crosslinked with radiation.

As the polyfunctional monomer having two or more radiation-reactive unsaturated bonds, a polyfunctional monomer component having two or more of one kind or two or more kinds radiation-reactive groups which can be crosslinking-treated (cured) by irradiation of radiation, such as a vinyl group, an acryloyl group, a methacryloyl group, and a vinylbenzyl group is used. Generally, a component having 10 or less of radiation-reactive unsaturated bonds is suitably used. Two or more kinds of the polyfunctional monomer may be used by mixing.

Examples of the polyfunctinal monomer include ethylene glycol di(meth)acrylate, diethlene glycol di(meth) acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylenebisacrylamide.

An amount of the polyfunctinoal monomer to be used depends on balance between a (meth)acryl-based polymer to be crosslinked, and is appropriately selected depending on utility as a pressure-sensitive adhesive sheet. In order to obtain sufficient heat resistance due to a cohesive strength of an acryl pressure-sensitive adhesive, generally, the monomer is preferably blended at 0.1 to 30 parts by weight relative to 100 parts by weight of a (meth)acryl-based polymer. From a viewpoint of flexibility and tackiness, the monomer is preferably blended at 10 parts by weight or less relative to 100 parts by weight of a (meth)acryl-based polymer.

Examples of radiation include ultraviolet ray, laser ray, $\alpha$ ray, $\beta$ ray, $\gamma$ ray, X-ray, and electron beam. From a viewpoint of controlling property and better handling property and a cost, ultraviolet ray is suitably used. More preferably, ultraviolet ray having a wavelength of 200 to 400nm is used. Ultraviolet ray can be irradiated using an appropriate light source such as a high pressure mercury lamp, a micro-wave excitation-type lamp, and a chemical lamp. When ultraviolet ray is used as irradiation, a photopolymerization initiator is added to an acryl pressure-sensitive adhesive layer.

The photopolymerization initiator depends on a kind of a radiation-reactive component, and may be a substance which produces a radical or a cation by irradiating ultraviolet ray having an appropriately wavelength which can trigger the polymerization reaction.

Example of the photoradical polymerization initiator include benzoins such as benzoin, benzoin methyl ether, benzoin ethyl ether, methyl o-benzoylbenzoate-p-benzoin ethyl ether, benzoin isopropyl ether, and $\alpha$-methylbenzoin, acetophenes such as benzylmethylketal, trichloroacetophenone, 2,2-diethoxyacetophenone, and 1-hydroxycyclohexyl phenyl ketone, propiophenones such as 2-hydroxy-2-methylpropiophenone, and 2-hydroxy-4'-isopropyl-2-methylpropiophenone, benzophenones such as benzophenone, methylbenzophenone, p-chlorobenzophenone, and p-dimethylaminobenzophenone, thioxanthons such as 2-chlorothioxanthon, 2-ethylthioxanthon, and 2-isopropylthioxanthon, acylphosphine oxides such as bis(2,4,6-trimethylbenzoyl)-phenylphosphine oxide, 2,4,6-trimethylbenzoyldiphenylphosphine oxide, and (2,4,6-trimethylbenzoyl)-(ethoxy)-phenylphosphine oxide, benzil, dibenzsuberone, and $\alpha$-acyloxime ether.

Examples of a photocation polymerization initiator include onium salts such as an aromatic diazonium salt, an aromatic iodonium salt, and an aromatic sulfonium salt, organometallic complexes such as an ion-allene complex, a titanocene complex, and an aryl silanol-aluminum complex, nitrobenzyl ester, sulfonic acid derivative, phosphoric acid ester, phenolsulfonic acid ester, diazonaphthoquinone, and N-hydroxymidosulfonate. Two or more kinds of the photopolymerization initiators may be used by mixing.

It is preferably that the photopolymerization initiator is blended usually in a range of 0.1 to 10 parts by weight, preferably 0.2 to 7 parts by weight relative to 100 parts by weight of a (meth)acryl-based polymer.

Further, it is also possible to use a photoinitiation polymerization assistant such as amines. Examples of the photoinitiation assistant include 2-dimethylaminoethyl benzoate, diemethylaminoacetophenone, p-dimethylaminobenzoic acid ethyl ester, and p-dimethylaminobenzoic acid isoamyl ester. Two or more kinds of the photopolymerization

initiation assistants may be used. It is preferably that the polymerization initiation assistant is blended at 0.05 to 10 parts by weight, further 0.1 to 7 parts by weight relative to 100 parts by weight a (meth)acryl-based polymer.

Furthermore, the pressure-sensitive adhesive composition used in the pressure-sensitive adhesive sheet of the present invention may contain known additives properly, such as adhesion improver, surface lubricant, plasticizer, softener, leveling agent, aging retardant, antioxidant, anticorrosive, light stabilizer, ultraviolet absorber, polymerization inhibitor, antistatic agent, silane coupling agent, inorganic or organic filler, metal powder, coloring agent (pigment or dye), and other known additives in powder, granules, foil or the like, depending on the purpose and application.

Meanwhile, the pressure-sensitive adhesive layer in the present invention is such that the aforementioned pressure-sensitive adhesive composition is crosslinked. In addition, pressure-sensitive adhesive sheets and double-sided pressure-sensitive adhesive tapes of the present invention are such that such the pressure-sensitive adhesive layer is formed on a supporting film. Thereupon, crossslinking of the pressure-sensitive adhesive composition is generally performed after coating of the pressure-sensitive adhesive composition, and a pressure-sensitive adhesive layer composition after crosslinking may be also transferred onto a supporting film.

When a photopolymerization initiator as an arbitrary component is added as described above, a pressure-sensitive adhesive layer can be obtained by coating the pressure-sensitive adhesive composition directly on a subject to be protected, or coating on one side or both sides of a supporting substrate(a supporting film), and performing light irradiation. Usually, a pressure-sensitive adhesive layer is used by photopolymerization by irradiating with ultraviolet ray having an irradiance of 1 to 200mW/cm$^2$ at a wavelength of 300 to 400nm, at an expose dose of around 200 to 4000mJ/cm$^2$.

A method of forming a pressure-sensitive adhesive layer on a film is not particularly limited, but for example, a layer is prepared by coating the aforementioned pressure-sensitive adhesive composition on a supporting film(or a support, a releasing liner etc.), and drying this to remove a polymerization solvent to form a pressure-sensitive adhesive layer on a supporting film. Thereafter, aging may be performed for the purpose of adjusting transference of a component of a pressure-sensitive adhesive layer or adjusting a crosslinking reaction. Alternatively, when pressure-sensitive adhesive sheets are prepared by coating a pressure-sensitive adhesive composition on a supporting film, one or more kinds of solvents other than a polymerization solvent may be newly added to the composition so that the composition can be uniformly coated on a supporting film.

In addition, as a method of forming the pressure-sensitive adhesive layer of the present invention, the known method used for preparing pressure-sensitive adhesive sheets is used. Specifically, examples include roll coating, gravure coating, reverse coating, roll brushing, spray coating, and air knife coating methods, immersing and curtain coating method, and extruding coating method with a die coater.

Pressure-sensitive adhesive sheets and double-sided pressure-sensitive adhesive tapes of the present invention are such that the aforementioned pressure-sensitive adhesive layer is coated on one side or both sides of various supports comprising a plastic film such as a polyester film, or a porous material such as a paper and a non-woven fabric at a thickness of usually 5 to 1000μm, preferably around 10 to 100μm, to form an aspect of a sheet or a tape.

The plastic substrate is not particularly limited as far as it can be formed into a sheet or a film, and examples include a polyolefin film such as polyethylene, polypropylene, poly-1-butene, poly-4-methyl-1-pentene, a polybutadiene film, a polymethylpentene film, an ethylene-propylene copolymer, an ethylene- 1-butene copolymer, an ethylene-vinyl acetate copolymer, an ethylene-ethyl acrylate copolymer, and an ethylene-vinyl alcohol copolymer, a polyester film such as polyethylene terephthalate, polyethylene naphthalate, and polybutylene terephthalate, a polyacrylate film, a polyurethane film, a polystyrene film, a polyamide film such as nylon 6, nylon 6,6, and partially aromatic polyamide, a polyvinyl chloride film, a vinyl chloride copolymer film, a polyvinylidene chloride film, and a polycarbonate film.

A thickness of the film is usually 4 to 100 μm, preferably around 4 to 25 μm.

The plastic substrate may be subjected to releasing, anti-staining or acid treatment with silicone, fluorine, long chain alkyl-based or fatty acid amide-based releasing agent, or a silica powder, easy adhesion treatment such as alkali treatment, primer treatment, corona treatment, plasma treatment, and ultraviolet ray treatment, or coating-type, kneading-type, or deposition-type antistatic treatment, if necessary.

If necessary, a separator (or a releasing liner, a releasing sheet etc.) can be laminated on a surface of a pressure-sensitive adhesive for the purpose of protecting a pressure-sensitive adhesive surface. As a substrate constituting a separator, there are a paper and a plastic film, and a plastic film is suitably used from a viewpoint of excellent surface smoothness. In the case of baseless type, in particular, as the releasing liner, it is preferred to use plastic base material with smooth surface, especially releasing treated material of polyethylene terephthalate (PET), polycarbonate, and methyl polymethacrylate.

The film is not particularly limited as far as it is a film which can protect the pressure-sensitive adhesive layer, and examples include a polyolefin film such as polyethylene, polypropylene, poly-1-butene, poly-4-methyl-1-pentene, an ethylene·propylene copolymer, an ethylene- 1-butene copolymer, an ethylene-vinyl acetate copolymer, an ethylene-ethyl acrylate copolymer, and an ethylene-vinyl alcohol copolymer, a polyether film such as polyethylene terephthalate, polyethylene naphthalate, and polybutylene terephthalate, a polyacrylate film, a polystyrene film, a polyamide film such

as nylon 6, nylon 6,6, and partially aromatic polyamide, a polyvinyl chloride film, a poly vinylidene chloride film, and a polycarbonate film.

A thickness of the film is usually around 4 to 100μm, preferably around 4 to 25 μm. A pressure-sensitive adhesive layer applying surface of the film is appropriately subjected to treatment with a releasing agent such as a silicone-based, fluorine-based, long chain alkyl-based, or fatty acid amide-based releasing agent, or a silica powder.

The pressure-sensitive adhesive composition, the pressure-sensitive adhesive layer, the pressure-sensitive adhesive sheets and the double-sided pressure-sensitive adhesive tapes using the present invention are used, particularly, in plastic products on which static electricity is easily generated and, in particular, can be used as a surface protecting film used for the purpose of protecting an optical member surface such as a polarizing plate, a wavelength plate, an optical compensating film, a light diffusion sheet and a reflecting sheet which are used in a liquid crystal display.

EXAMPLES

Examples which specifically show a construction and effect of the present invention will be explained below. Assessment items in Examples were measured as follows:

<Measurement of molecular weight>

A molecular weight was measured using a GPC apparatus (HLC-8120GPC manufactured by Tosoh Corporation). Measuring conditions are as follows.

Sample concentration: 0.2wt% (THF solution, sample-polymer:1g)
Sample injection amount: 10μl
Eluent: THF
Flow rate: 0.6ml/min
Measuring temperature: 40˚C
Column:
Sample column;
TSKguard column SuperHM-H/H4000/H3000/H2000
Detector: Refractive index detector (RI)
A molecular weight was obtained in terms of polystyrene.

<Measurement of glass transition temperature Tg>

In the present invention, the glass transition temperature (Tg) is calculated in the mathematical formula (3).

[mathematical formula 3]

$$\frac{W}{Tg} = \frac{W_1}{Tg} + \frac{W_2}{Tg_2} + \cdots + \frac{W_n}{Tg_n} \qquad (3)$$

[In the mathematical formula (3), Tg is Tg (K) of copolymer, $Tg_n$ is Tg (K) of homopolymer of monomer n, and $W_n$ is weight percentage of monomer n.]

<Analysis of ionic liquid structure>

Structural analysis of an ionic liquid was performed by NMR measurement, XRF measurement, and FT-IR measurement.

[NMR measurement]

NMR measurement was performed under the following measuring condition using a nuclear magnetic resonance apparatus (EX-400 manufactured by JEOL. Ltd.).

Observation frequency: 400 MHz ($^1H$), 100MHz ($^{13}C$)

Measuring solvent: acetone-$d_6$
Measuring temperature :23˚C

[XRF measurement]

XRF measurement was performed under the following measuring condition using a scanning-type fluorescent X-ray analyzing apparatus (ZSX-100e manufactured by Rigaku Corporation).

Measuring method : filter paper method
X-ray source: Rh

[FT-IR measurement]

FT-IR measurement was performed under the following measuring condition using an infrared spectrophotometer (Magna-560 manufactured by Nicolet).

Measuring method: ATR method
Detector: DTGS
Resolution: 4.0 $cm^{-1}$
Accumulation times: 64
Examples will be explained below.

[Preparation of (meth)acryl-based polymers]

(Acryl-based polymer (A))

In four-neck separable flask comprising agitating a stirring wing, a thermometer, a nitrogen gas introducing tube, and a condenser, 190 parts by weight of butyl acrylate, and 10 parts by weight of acrylic acid were charged, together with 0.3 part by weight of 2,2'-azobis isobutyl nitrile as polymerization initiator and 466 parts by weight of ethyl acetate, and nitrogen gas was introduced while the solution was stirred slowly, and after agitation for 1 hour, polymerization reaction was performed for 10 hours with the flask temperature kept at 63˚C, and a solution of acryl-based polymer (A) (30 wt.%) was prepared. This acryl-based polymer (A) had Tg of -50˚C and weight-average molecular weight of 550,000.

[Preparation of (meth)acryl-based oligomers]

(Acryl-based oligomer (a))

In four-neck separable flask comprising agitating a stirring wing, a thermometer, a nitrogen gas introducing tube, and a condenser, 192 parts by weight of cyclohexyl methacrylate and 8 parts by weight of acrylic acid were charged, together with 6 parts by weight of 2-mercapto ethanol as chain transfer agent, and 0.4 part by weight of 2,2'-azobis isobutyl nitrile as polymerization initiator and 240 parts by weight of toluene, and nitrogen gas was introduced while the solution was stirred slowly, and after agitation for 1 hour, polymerization reaction was performed for 3 hours with the flask temperature kept at 70˚C, and another 2 hours at 75˚C, a solution of acryl-based oligomer (a) (50 wt.%) was prepared. This acryl-based oligomer (a) had Tg of 66˚C and weight-average molecular weight of 4,000.

(Acryl-based oligomer (b))

In four-neck separable flask comprising agitating a stirring wing, a thermometer, a nitrogen gas introducing tube, and a condenser, 192 parts by weight of cyclohexyl methacrylate and 8 parts by weight of acrylic acid were charged, together with 0.4 part by weight of 2-mercapto ethanol as chain transfer agent, and 0.4 part by weight of 2,2'-azobis isobutyl nitrile as polymerization initiator and 240 parts by weight of toluene, and nitrogen gas was introduced while the solution was stirred slowly, and after agitation for 1 hour, polymerization reaction was performed for 3 hours with the flask temperature kept at 70˚C, and another 2 hours at 75˚C, a solution of acryl-based oligomer (b) (50 wt.%) was prepared. This acryl-based oligomer (b) had Tg of 61˚C and weight-average molecular weight of 60,000.

[Preparation of ionic liquids]

(Ionic liquid (1))

In four-neck flask comprising agitating a stirring wing, a thermometer, and a condenser, a solution of 10 parts by weight of 1-butyl-3-methyl pyridinium chloride (manufactured by Wako Pure Chemical Industries, Ltd. diluted in distilled water to 20 wt.% was added and stirred by rotating the agitating a stirring wing, and a solution of 19 parts by weight of lithium bis (trifluoromethane sulfonyl) imide (manufactured by Kishida Chemical Co., Ltd.) diluted in distilled water to 20 wt.% was added gradually. By agitating for 2 hours at 23˚C after addition, the solution was let stand for 12 hours, and the supernatant was removed to obtain a liquid product. The obtained liquid product was washed three times with distilled water and the residue was dried for 2 hours in the environment of 110˚C, and 20 parts by weight of ionic liquid (1) (liquid state at 25˚C) was obtained.
NMR ($^1$H, $^{13}$C) measurement, FT-IR measurement, and XRF measurement of the resulting ionic liquid (1) were performed, and 1-butyl-3-methyl pyridinium bis (trifluoromethanesulfonyl)imide was identified and confirmed.

(Ionic liquid (2))

In four-neck flask comprising agitating a stirring wing, a thermometer, and a condenser, 20 parts by weight of diallyl dimethyl ammonium chloride (60 wt.% aqueous solution, manufactured by Tokyo Kasei Kogyo Co., Ltd) was added, and a solution of 23 parts by weight of lithium bis (trifluoromethane sulfonyl) imide (manufactured by Kishida Chemical Co., Ltd.) diluted in distilled water to 20 wt.% was added gradually while rotating the agitating a stirring wing. By agitating for 2 hours at 23˚C after addition, the solution was let stand for 12 hours, and the supernatant was removed, and dichloromethane extract was obtained. The obtained dichloromethane extract was washed twice in 100 parts by weight of distilled water, and dichloromethane was fractioned, and a liquid product was obtained. The obtained liquid product was dried for 2 hours in the environment of 110˚C, and 28 parts by weight of ionic liquid (2) (liquid state at 25˚C) was obtained.
NMR ($^1$H, $^{13}$C) measurement, FT-IR measurement, and XRF measurement of the resulting ionic liquid (2) were performed, and diallyl dimethyl ammonium bis (trifluoromethanesulfonyl)imide was identified and confirmed.

[Example 1]

(Preparation of pressure-sensitive adhesive composition)

In 100 parts by weight of the acryl-based polymer (A) (30 wt.%), a solution of 20 parts by weight of the acryl-based oligomer (a) (50 wt.%) was added, together with 2 parts by weight of the ionic liquid (1), and 0.1 part by weight of 1,3-bis (N,N-diglycidyl amino methyl) cyclohexane (TETRAD-C manufactured by Mitsubishi Gas Chemical Co., Ltd.) as crosslinking agent, and the mixture was stirred for about 1 minute at 25˚C, and an acrylic pressure-sensitive solution (1) was prepared.

(Preparation of pressure-sensitive adhesive sheet)

The acrylic pressure-sensitive solution (1) was applied to the silicone treated surface of polyethylene terephthalate film of 38 μm in thickness with silicone treatment applied on one side, and the film was heated for 3 minutes at 130˚C, and a pressure-sensitive adhesive layer of 25 μm in thickness was obtained. Further, on the surface of the pressure-sensitive adhesive layer, the silicone treated surface of polyethylene terephthalate film of 50 μm in thickness with silicone treatment applied on one side was adhered, and a pressure-sensitive adhesive sheet was prepared.

[Example 2]

(Preparation of pressure-sensitive adhesive composition)

In 100 parts by weight of the acryl-based polymer (A) (30 wt.%), a solution of 20 parts by weight of the acryl-based oligomer (a) (50 wt.%) was added, together with 2 parts by weight of the ionic liquid (2), and 0.1 part by weight of 1,3-bis (N,N-diglycidyl amino methyl) cyclohexane (TETRAD-C manufactured by Mitsubishi Gas Chemical Co., Ltd.) as crosslinking agent, and the mixture was stirred for about 1 minute at 25˚C, and an acrylic pressure-sensitive solution (2) was prepared.

(Preparation of pressure-sensitive adhesive sheet)

A pressure-sensitive adhesive sheet was prepared in the same procedure as in Example 1, except that the acrylic pressure-sensitive solution (2) was used instead of the acrylic pressure-sensitive solution (1).

[Comparative Example 1]

(Preparation of pressure-sensitive adhesive composition)

An acrylic pressure-sensitive solution (3) was prepared in the same procedure as in Example 1, except that the ionic liquid (1) was not used.

(Preparation of pressure-sensitive adhesive sheet)

A pressure-sensitive adhesive sheet was prepared in the same procedure as in Example 1, except that the acrylic pressure-sensitive solution (3) was used instead of the acrylic pressure-sensitive solution (1).

[Comparative Example 2]

(Preparation of pressure-sensitive adhesive composition)

An acrylic pressure-sensitive solution (4) was prepared in the same procedure as in Example 1, except that the solution of acryl-based oligomer (a) (50 wt.%) was not used.

(Preparation of pressure-sensitive adhesive sheet)

A pressure-sensitive adhesive sheet was prepared in the same procedure as in Example 1, except that the acrylic pressure-sensitive solution (4) was used instead of the acrylic pressure-sensitive solution (1).

[Comparative Example 3]

(Preparation of pressure-sensitive adhesive composition)

An acrylic pressure-sensitive solution (5) was prepared in the same procedure as in Example 1, except that 20 parts by weight of the solution of acryl-based oligomer (b) (50 wt.%) was used instead of 20 parts by weight of the solution of acryl-based oligomer (a) (50 wt.%).

(Preparation of pressure-sensitive adhesive sheet)

A pressure-sensitive adhesive sheet was prepared in the same procedure as in Example 1, except that the acrylic pressure-sensitive solution (5) was used instead of the acrylic pressure-sensitive solution (1).

In the pressure-sensitive adhesive sheets obtained in the Examples and Comparative Examples, peeling electrification voltage, adhesive strength, dust sticking property, prevention of peeling off and separation, and transparency were evaluated in the following procedure.

<Measurement of peeling electrification voltage>

The pressure-sensitive adhesive sheet was cut in a size of 70 mm in width and 130 mm in length, and the separator of one side was peeled off, and the sheet was compressed by hand roller to a preliminarily destaticized acrylic plate (Acrylite manufactured by Mitsubishi Rayon Co., Ltd., thickness: 1 mm, width: 70 mm, length: 100 mm).

After letting stand for a day in the environment of 23˚C x 50 % RH, the sample was set at specified position as shown in Fig. 1. The end of separator was fixed on an automatic winding machine, and peeled at peel angle of 150˚C and peel speed of 10 m/min. The potential generated at this time on the pressure-sensitive adhesive layer surface was measured by a potential measuring instrument fixed at specified position (KSD-0103, manufactured by Kasuga Electric). It was measured in the environment of 23˚C x 50% RH.

<Evaluation of dust sticking property>

On the basis of the peeling electrification voltage (kV) measured in the measurement of peeling electrification voltage, dust sticking property was evaluated. The criterion is as follows.
When peeling electrification voltage was less than 0.1 kV: ○
When peeling electrification voltage was 0.1 kV or more: ×

<Evaluation of transparency>

The prepared pressure-sensitive adhesive sheet was adhered to a slide glass (S-1111 manufactured by Matsunami Glass Ind., Ltd.), and haze value was measured as follows by haze meter.
Analytical apparatus: HM-150 (manufactured by Murakami Color Research Institute)

Haze value (%) is calculated as follows.
Haze value (%) = ($H_d$/$H_t$) x 100
$H_d$: diffusion transmissivity (%)
$H_t$: total ray transmissivity (%)

<Measurement of adhesive strength>

The prepared pressure-sensitive adhesive sheet was adhered to a polyethylene terephthalate (PET) film (Lumillar S-10, thickness: 25 μm, manufactured by Toray Industries, Inc.), and a test piece of 20 mm in width and 120 mm in length was prepared.
The test piece was laminated to glass (soda lime glass, manufactured by Matsunami Glass Ind., Ltd.), and polycarbonate (PC1151, manufactured by Teijin Ltd.), in the environment of23˚C x 50% RH, by roller (19.6N, one reciprocating process).
After lamination, letting stand in the environment of23˚C x 50% RH for 30 minutes, the test piece was peeled by Tensilon type peel testing machine at peel speed of 300 m/min and peel angle of 180 degrees, and adhesive strengths were measured. Strengthes were measured in the environment of 23˚C x 50% RH.

<Evaluation of prevention of peeling off and separation>

Using a laminator (linear pressure about 100 N/cm), the fabricated pressure-sensitive adhesive sheet was adhered to polycarbonate (PC1151, manufactured by Teijin Ltd., thickness: 1 mm), and on other side, the adhesive side of easily adhering PET (polyethylene terephthalate) (A4100, #100, manufactured by Toyobo) was adhered, and a test piece was prepared.
The test piece was aged for a day at 50˚C, and exposed to heat test of 80˚C for 250 hours, and prevention of peeling off and separation was visually evaluated. The criterion is as follows.

No foams found: ○
Foams observed: ×

The Results are shown in Table 1.

Table 1

| | Peeling electrification voltage [kV] | Adhesive strength [N/20mm] | | Dust sticking property [-] | Prevention of peeling off, separation [-] | Haze value (transparency) [%] |
|---|---|---|---|---|---|---|
| | | To glass | To polycarbonate | | | |
| Ex. 1 | 0.0 | 19 | 12 | O | O | 0.5 |
| Ex. 1 | 0.0 | 19 | 13 | O | O | 0.5 |
| Comp. Ex. 1 | 1.1 | 22 | 14 | × | O | 0.5 |
| Comp. Ex. 2 | 0.0 | 10 | 12 | O | × | 0.5 |
| Comp. Ex. 3 | 0.0 | 17 | 11 | O | × | 10.9 |

As clear from the results of Table 1, in the case of using pressure-sensitive adhesive compositions manufactured according to the present invention (Examples 1 and 2), the peeling electrification voltage of pressure-sensitive adhesive sheet is suppressed at low value, and it is found to be excellent in dust sticking property, prevention of peeling off and separation, and transparency.

By contrast, when the ionic liquid of the present invention is not contained (Comparative Example 1), the peeling electrification voltage of pressure-sensitive adhesive sheet is high. In the case not containing the (meth)acryl-based oligomer of the present invention (Comparative Examples 2, 3), prevention of peeling off and separation is poor. Therefore, in the pressure-sensitive adhesive sheets of Comparative Examples 1 to 3, results are not satisfactory in any aspect of suppression of peeling electrification voltage to polarizer, dust sticking property, prevention of peeling off and separation, and transparency, and they are found not suitable to pressure-sensitive adhesive composition for antistatic pressure-sensitive adhesive sheet.

Hence, the pressure-sensitive adhesive composition of the present invention is proved to be a pressure-sensitive adhesive composition excellent in antistatic property of pressure-sensitive adhesive sheet or the like at the time of peeling off.

An object of the present invention is to provide a pressure-sensitive adhesive composition which is excellent in antistatic property of a pressure-sensitive adhesive tapes when separators are peeled off, and has reduced stainability in an adherend, and excellent in transparency, and prevention of occurrence of peeling off and separation, and an antistatic pressure-sensitive adhesive sheet and a double-sided pressure-sensitive adhesive tape using the same. There is provided a pressure-sensitive composition comprising an ionic liquid, a (meth)acryl-based oligomer of weight-average molecular weight of 1,000 to 50,000, and a (meth)acryl-based polymer of glass transition temperature (Tg) of 0˚C or less as base polymer.

## Claims

1. A pressure-sensitive adhesive composition comprising an ionic liquid, a (meth)acryl-based oligomer of weight-average molecular weight of 1,000 to 50,000, and a (meth)acryl-based polymer of glass transition temperature (Tg) of 0˚C or less as base polymer.

2. The pressure-sensitive adhesive composition of claim 1, wherein 10 to 35 parts by weight of the (meth)acryl-based oligomer is contained in 100 parts by weight of the (meth)acryl-based polymer.

3. The pressure-sensitive adhesive composition of claim 1 or 2, wherein the ionic liquid is one type or more of an onium salt containing nitrogen, an onium salt containing sulfur, and an onium salt containing phosphorus.

4. The pressure-sensitive adhesive composition of any one of claims 1 to 3, wherein the ionic liquid contains one or more cations expressed in the following general formulas (A) to (D).

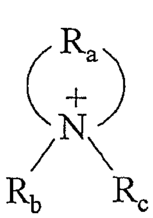
(A)

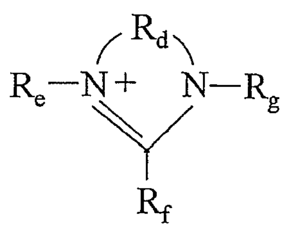
(B)

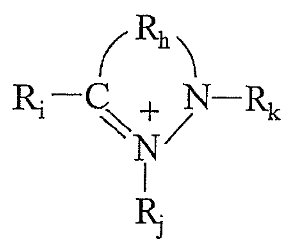
(C)

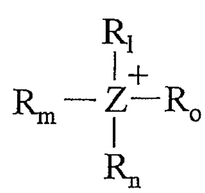
(D)

[in the formula (A), $R_a$ represents a hydrocarbon group of a carbon number of 4 to 20, and may contain a hetero atom, and $R_b$ and $R_c$ are the same or different, represent hydrogen or a hydrocarbon group of a carbon number of 1 to 16, and may contain a hetero atom, provided that, when a nitrogen atom contains a double bond, $R_c$ is not present]

[in the formula (B), $R_d$ represents a hydrocarbon group of a carbon number of 2 to 20, and may contain a hetero atom, and $R_e$, $R_f$ and $R_g$ are the same or different, represent hydrogen or a hydrocarbon group of a carbon number of 1 to 16, and may contain a hetero atom]

[in the formula (C), $R_h$ represents a hydrocarbon group of a carbon number of 2 to 20, and may contain a hetero atom, and $R_i$, $R_j$ and $R_k$ are the same or different, represent a hydrogen or a hydrocarbon group of a carbon number

of 1 to 16, and may contain a hetero atom]
[in the formula (D), Z represents a nitrogen atom, a sulfur atom, or a phosphorus atom, and $R_l$, $R_m$, $R_n$ and $R_o$ are the same or different, represent a hydrocarbon group of a carbon number of 1 to 20, and may contain a hetero atom, provided that, when Z is a sulfur atom, $R_o$ is not present]

**5.** The pressure-sensitive adhesive composition of any one of claims 1 to 4, wherein the (meth)acryl-based oligomer is a (meth)acryl-based oligomer of glass transition temperature (Tg) of 60˚C to 190˚C.

**6.** The pressure-sensitive adhesive composition of any one of claims 1 to 5, wherein the (meth)acryl-based oligomer is a (meth)acryl-based oligomer mainly containing one type or more of acrylate and/or methacrylate having an alicyclic alkyl group.

**7.** The pressure-sensitive adhesive composition of any one of claims 1 to 6, wherein the (meth)acryl-based polymer is a (meth)acryl-based polymer mainly containing one type or more of acrylate and/or methacrylate having an alkyl group with 1 to 14 carbon atoms.

**8.** A pressure-sensitive adhesive layer obtained by crosslinking a pressure-sensitive adhesive composition of any one of claims 1 to 7.

**9.** A pressure-sensitive adhesive sheet **characterized by** forming a pressure-sensitive adhesive layer obtained by crosslinking a pressure-sensitive adhesive composition of any one of claims 1 to 7 on either one side or both sides of a support.

**10.** A double-sided pressure-sensitive adhesive tape **characterized by** forming a pressure-sensitive adhesive layer obtained by crosslinking a pressure-sensitive adhesive composition of any one of claims 1 to 7 on both sides of a support.

[FIG. 1]

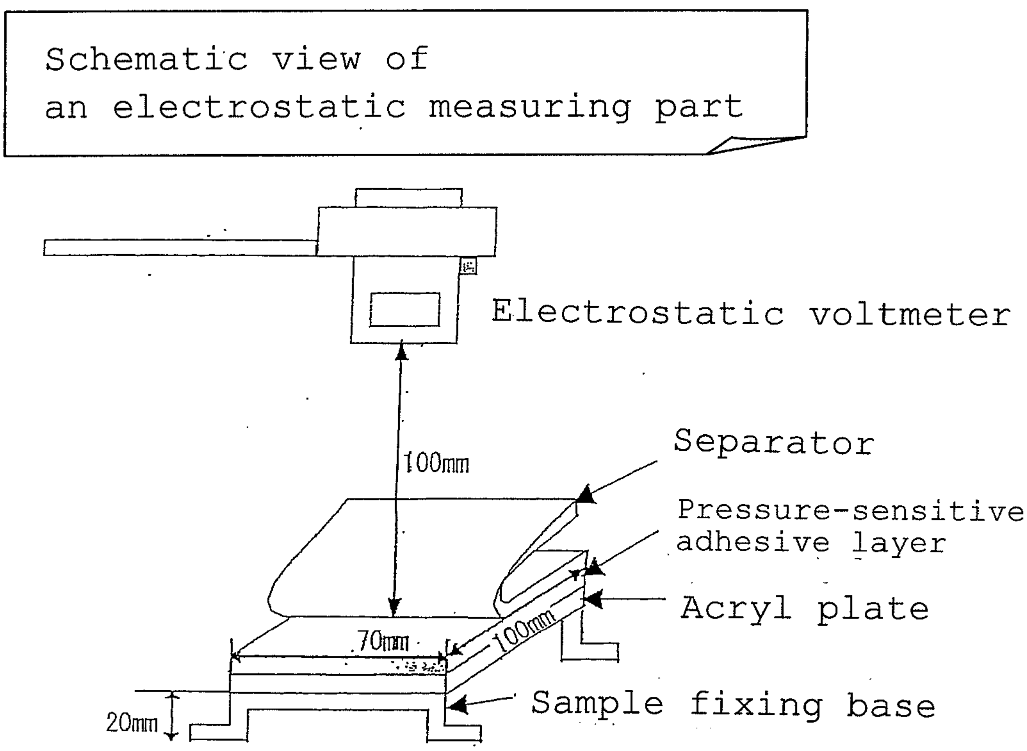
Schematic view of
an electrostatic measuring part
Electrostatic voltmeter
100mm
Separator
Pressure-sensitive
adhesive layer
Acryl plate
70mm
100mm
20mm
Sample fixing base